# EUROPEAN PATENT APPLICATION

(11) **EP 1 028 572 A1**
(43) Date of publication of application: **16.08.2000**
(21) Application number: 99440027.3
(22) Date of filing: 12.02.1999
(51) Int. Cl.: H04M 1/00, G06K 11/18

(54) **Control element for a menu driven device and radio telephone comprising such a control element**

(71) Applicant: ALCATEL, 75008 Paris (FR)
(72) Inventor: Gadeau, Jean-Yves, 67400 Ilkirch (FR); Vaudrey, Denis, 67380 Lingolsheim (FR)
(74) Representative: Rausch, Gabriele, Dr.

(57) **Abstract**

A new control element (BE) is specified for a menu driven electronic device, preferably for a radio telephone (F). The control element (BE) is used to move a marker in a menu which is shown on a display device (S) of the device. It consists of a flexible band (B) tensioned over at least two rollers (W1, W2) and which can be moved in at least one direction over the rollers (W1, W2) and of a means for recording the movement of the flexible band (B). The control element (BE) allows a simpler and more intuitive operation for the user and has a low overall height.

The control element (BE) is preferably designed so that the band (B) can only be moved in steps and so that below the band between the two rollers (W1, W2) there is a push-button which can be activated by pressing on the band (B).

## Description

The invention relates to a control element for a menu driven electronic device, particularly a radio telephone and a menu driven radio telephone equipped with such a control element.

Many electronic devices are controlled by displaying a menu on a display of the device, followed by highlighting and then selecting one of the menu items, for example, by pressing a selection key. In radio telephones in particular, this type of operation is widespread. Thus from patent specification US 5,758,295 a menu driven radio telephone is known in which a menu can be leafed through and a menu item marked by activating cursor keys. By pressing a selection key, the marked menu item is activated.

In addition to cursor keys, other control elements are also known in radio telephones. From the Internet pages http://www.callya.de/sonyzl.htm and http://www.sony.de/prod_special/zl/html/jog.html, a radio telephone with a wheel known as a jog dial is known. Menu items are marked by turning the wheel and selections are made by pressing once on the wheel. With such a wheel there is, however, the disadvantage that either a fitted depth corresponding to the diameter of the wheel is required or that with a smaller wheel with a corresponding smaller fitted depth numerous rotations must be made in order to leaf through the whole menu.

For lap-top computers, other control elements such as mice, joysticks, track balls, track points or touchpads are known for moving a pointer symbol for selecting a graphic element from a graphic user interface shown on a screen. These are, however, only partly suited for operating a menu controlled electronic device such as a radio telephone. This arises on the one hand from the space required on the device for the control elements and on the other hand from the fact that the operator does not find the use of such control elements intuitive.

It is therefore an object of the present invention to provide a control element for a menu driven electronic device which allows simple and intuitive operation by the user and which can be placed on the device at a small fitted depth which saves space. An additional object of the invention is to provide a radio telephone with such a control element.

The object with regard to the control element is achieved by the features of claim 1 and with regard to the radio telephone by the features of claim 5. Advantageous embodiments are given in the dependent claims.

An advantage of the invention is that a high speed can be reached in scrolling through the menu using control element in accordance with the invention. An additional advantage is that the speed at which the user scrolls through the menu is determined by the speed at which the user moves the band and not a pre-determined key repeat frequency as in cursor keys with automatic repeat functions by prolonged depression of the key.

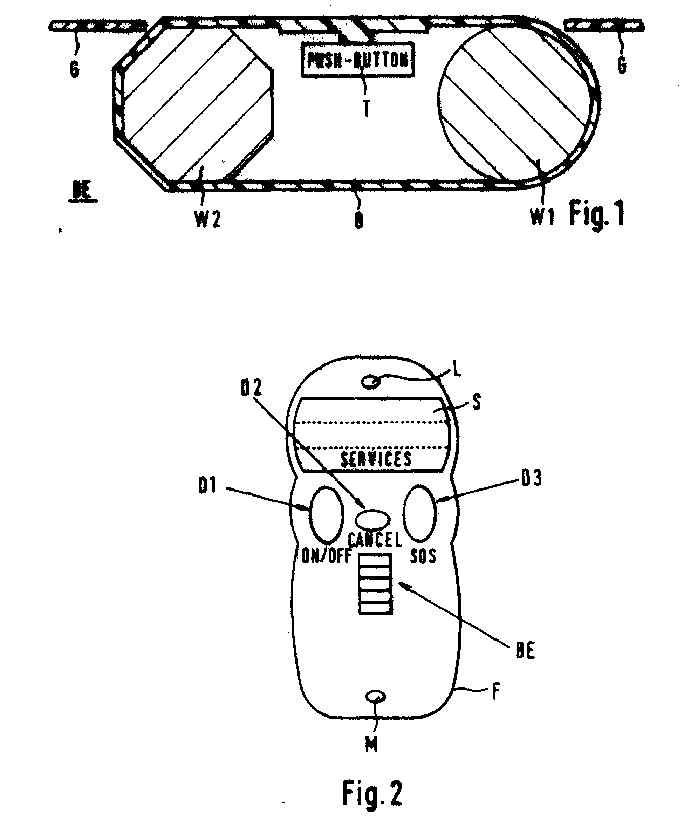

In the following, the invention will be explained in more detail using Figures 1 and 2. These show:
- Figure 1:: a cross section through an control element in accordance with the invention; and
- Figure 2:: a radio telephone with the control element from Figure 1.

The control element BE shown in Figure 1 is placed in a recess in the casing of a menu driven radio telephone. It consists of a flexible band B which is tensioned around two rollers W1 and W2. The band B can be manufactured from rubber or a flexible plastic and can in addition have a ribbed or rippled surface so that it can be moved more easily over the rollers W1 and W2 by a user. The first roller W1 has a circular cross section whilst the second roller W2 has a polygonal cross section of a regular octagon. In this way a stepped movement of the band B can be achieved whereby each side of the octagon, i.e. an eighth of a rotation, corresponds to one step. Below the flexible band B, and between the two rollers W1 and W2, there is a push-button T which can be activated by pressing on the band B. In this way, a selection can be made of a menu item highlighted in the menu of the radio telephone.

Not shown is a means for detecting a movement of the flexible band, e.g. a movement detector. Such a movement detector could be advantageously fitted on the second roller W2 to detect a rotational movement of this roller.

One such movement detector can be designed, for example, by segmented contacts being applied to an extended axis of the roller and being tapped by one or more spring contacts. Through a rotational movement of the roller occasioned by the movement of the band, and dependent on the position of the axis, an electrical contact is made or broken. Alternatively, the rotational movement can be recorded optically. This design is more precise than mechanical sampling; however, there is an increased current requirement which is usually unwelcome in battery driven devices.

The control element is fitted in the casing so that the upper side of the flexible band connects almost flat with the upper surface G of the casing. In addition, seals such as in the form of brushes can be applied to both sides near the rollers to prevent penetration of dirt or foreign bodies.

A roller design can have them both with circular or polygonal cross sections. In the latter case, the flexible band can also be made from individual rigid or slightly flexible elements which are linked with one another to form a chain. The length of the individual members then corresponds to the length of one side of the polygon. In the former case, a stepped activation can then be achieved, for example, through a roller axis with a polygonal cross section and corresponding spring-supported bearings. When activated a step at a time, one step corresponds to the change in marking in the menu of the radio telephone from one menu item to the next. This is particularly advantageous as it is for the user a physically experienced and thus intuitive scrolling through the menu.

A stepwise movement of the band can also be achieved with a third roller having a polygonal cross section and being in contact with the second roller (not shown). The first and second rollers in this emodiment have a circular cross section. The third roller rolls with the second roller and gives the steps to it. Movement detection should be made with the third roller. This way, a very good differentiation between two stable states of the band can be achieved. An advantage of this embodiment is that the design and size of the first and second is independant from step size and detector characteristics.

The radio telephone F shown in Figure 2 contains the control element BE from Figure 1 with a ribbed flexible band. In addition, it has a display device S on which a menu can be displayed. In addition, it has three push-buttons D1, D2 and D3. Using the first push-button D1, the radio telephone can be switched on or a call ended. Using the second push-button D2, it is possible to switch over from the stand-by screen to the menu, e.g. a telephone book or a service menu. Using the third push-button, a call can be accepted and a subscriber number can be transmitted to set up a call. The microphone M and the loud speaker L of the radio telephone F are also shown.

The radio telephone F does not have a numerical keypad for dialling. Dialling is carried out using the control element BE. To do this, on first activating the control element BE, a menu appears on the display device with the individual available digits. By moving the flexible band, a marker is moved over the displayed digits. If the desired digit is highlighted, then it can be selected by pressing on the control element BE to activate the push-button located under the flexible band. By repeated selection of digits as described above, the complete desired subscriber number can be entered. In this way a numeric keypad is not required. The radio telephone can thus be made smaller and the space saved on the front of the radio telephone can be used by a larger display device. A push-button below the flexible band of the control element is not absolutely necessary. A selection of the marked menu entry can also be made, for example, by pressing the key D3.

The radio telephone shown in Figure 2 is designed as a one-piece mobile radio telephone. Such a radio telephone is often called a mobile phone.

## Claims

1. Control element (BE) for a menu driven electronic device (F) for moving a marker in a menu, characterised in that the control element (BE) comprises a flexible band (B) tensioned over at least two rollers (W1, W2) and which can be moved in at least one direction over the rollers (W1, W2) and a means for detecting a movement of the flexible band (B).

2. Control element in accordance with claim 1, in which the rollers (W1, W2) are arranged so that the flexible band (B) can only be moved in equidistant steps over the rollers (W1, W2).

3. Control element in accordance with claim 2, in which at least one of the rollers (W2) has a polygonal cross section.

4. Control element in accordance with claim 1, in which a push-button (T) is arranged below the flexible band (B) between the rollers (W1, W2) which can be activated by pressing on the flexible band (B) for the purpose of selecting a marked menu point.

5. Menu driven radio telephone (F) with a display device (S) for displaying a menu and a control element (BE) in accordance with claim 1, preferably claim 4, for marking a menu point.

6. Radio telephone in accordance with claim 5, in which all available digits for entering a subscriber number are displayed on the display device (S) and the entry of the subscriber number is carried out in steps by the repeated marking and selection of individual digits.
